(19) Europäisches Patentamt
European Patent Office
Office européen des brevets

(11) **EP 2 387 036 A1**

(12) **EUROPEAN PATENT APPLICATION**

(43) Date of publication:
**16.11.2011 Bulletin 2011/46**

(51) Int Cl.:
***G11B 7/24*** *(2006.01)*        ***G11B 7/257*** *(2006.01)*

(21) Application number: **10305489.6**

(22) Date of filing: **10.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Thomson Licensing
92130 Issy-les-Moulineaux (FR)**

(72) Inventor: **Knappmann, Stephan
78658 Zimmern ob Rottweil (DE)**

(74) Representative: **Arnold, Klaus-Peter
Deutsche Thomson OHG
European Patent Operations
Karl-Wiechert-Allee 74
30625 Hannover (DE)**

(54) **Optical disc comprising two nonlinear layers separated by a spacer layer**

(57)  The optical disc (20) comprises a substrate layer (S), a read-only data layer (3) having a pit/land data structure (P1-P4) arranged on the substrate layer, a first nonlinear layer (L6) with a super-resolution structure, and a second nonlinear layer (L2) with a super resolution structure or a reflective layer arranged between the first nonlinear layer (L6) and the data layer (3). Further, a spacer layer (L4) is disposed between the first and the second nonlinear layer (L6, L2), which spacer layer has a thickness (ST1) which is smaller between pits (P1-P4) and the first nonlinear layer (L6) with regard to the thickness (ST2) between lands (LA) and the first nonlinear layer (L6). The pits (P1-P4) are arranged in particular as protrusions on the data layer (3) and the spacer layer is disposed by using a spin-coating technique.

Fig. 2

L8: Cover layer
L7: dielectric (e.g. ZnS-SiO2)
L6: mask layer
L5: dielectric (e.g. SiN)
L4: spin coated layer (dielectric)
L3: dielectric (e.g. SiN)
L2: mask layer
L1: dielectric (e.g. ZnS-SiO$_2$)

EP 2 387 036 A1

**Description**

**TECHNICAL FIELD OF THE INVENTION**

The present invention relates to an optical disc comprising a substrate layer, a read-only data layer arranged on the substrate layer, a first nonlinear layer with a super resolution structure and a second nonlinear layer with a super resolution structure or a reflective layer arranged between the first nonlinear layer and the data layer. The optical disc is designed in particular for providing a high data capacity by utilizing a super-resolution effect.

**BACKGROUND OF THE INVENTION**

Optical storage media are media in which data are stored in an optically readable manner, for example by means of a laser and an optical detector, for example a photodetector, being integrated within a pickup. The detector is used for detecting reflected light of the laser beam when reading data on the storage medium. In the meanwhile a large variety of optical storage media is known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-Ray disc (BD), which allows to store up to about 50 GB on a dual layer disc. For reading and writing of a Blu-Ray disc an optical pickup with a laser wavelength of 405 nm and a numerical aperture of 0,85 is used. On the Blu-Ray disc a track pitch of 320 nm and a mark length from 2T to 8T or 9T is used, where T is the channel bit length and wherein 2T corresponds with a minimum mark length of 138, 149 or 160 nm.

The diffraction limit of optical instruments as described by the Abbe theory is about lambda/2NA, which is 238nm for a Blu-Ray type pickup with a wavelength lambda=405nm and a numerical aperture NA=0,85. This theoretical minimal detectable length from the diffraction theory is corresponding to a period of the pattern function, which is formed of a pit and of a land having the same length. The smallest detectable element of such a system is a pit or a land having a length of about lambda/4NA, which corresponds for a Blu-Ray type pickup with a length of 120nm.

New optical storage media with a super-resolution structure offer the possibility to increase the data density of the optical storage medium by a factor of two to four in one dimension as compared with the Blu-Ray disc. This is possible by including a nonlinear layer, which is placed above a data layer of the optical storage medium, and which significantly reduces the effective size of a light spot used for reading from or writing to the optical storage medium. The nonlinear layer can be understood as a mask layer because it is arranged above the data layer and for some specific materials only the high intensity center part of a laser beam can penetrate the mask layer. Further, semiconductor materials can be used as a nonlinear layer, e.g. InSb, which show a higher reflectivity in the center part of the focused laser beam, and which center reflectivity is dependent on the pit structure of the corresponding data layer. Therefore, the super-resolution effect allows to record and read data stored in marks of an optical disc, which have a size below the optical resolution limit of lambda/4NA of a corresponding optical pickup.

The nonlinear layer is often called a super-resolution near-field structure (Super-RENS) layer because it is assumed that for some specific materials, the optical effect of reducing the effective spot size of the laser beam is based on a near-field interaction between the marks and spaces of the data layer and the nonlinear layer. Super-RENS optical discs comprising a super-resolution near-field structure formed of a metal oxide, a polymer compound or a phase-change layer comprising GeSbTe or AgInSbTe are known.

In WO 2009/124735 an optical storage medium is disclosed comprising a substrate layer, a data layer arranged on the substrate layer, a first nonlinear layer with a super resolution near field structure, arranged above the data layer, a second non-linear layer with a super resolution near field structure arranged above the first nonlinear layer, and a first dielectric layer disposed between the first and the second nonlinear layer. The first and the second non-linear layers comprise a semiconductor material, which has an increased reflectivity, when irradiated with a laser beam.

**BRIEF SUMMARY OF THE INVENTION**

The optical disc comprises a substrate layer, a read-only data layer having a pit/land data structure arranged on the substrate layer, a first nonlinear layer with a super-resolution structure and a second nonlinear layer with a super resolution structure or a reflective layer arranged between the first nonlinear layer and the data layer. Between the first and the second nonlinear layer, a spacer layer is disposed having a thickness which is smaller between pits and the first nonlinear layer with regard to the thickness between lands and the first nonlinear layer.

The pits are arranged in particular as protrusions on the data layer. The spacer layer is disposed on the optical disc for example by using a spin coating technique. The spacer layer is disposed e.g. on a first dielectric layer arranged on the second non linear layer, or is disposed directly on the second nonlinear layer or the reflective layer. By using a spin coating technique for deposing the spacer layer, the thickness between the protrusions and the first nonlinear layer is different with regard to the thickness between the land areas of the data layer and the first nonlinear layer. The height of the protrusions is advantageously such that the reflectivity of the whole layer stack of the optical disc is close to zero independent of the laser power between the protrusions and the first nonlinear layer, and that two different reflectivity values exist at low and high laser power between the land areas and the first nonlinear layer. This provides a super-resolution read-out of the data of the optical disc having a very strong modulation of the HF signal, because the reflected signal on the depressions respectively pits is very low.

In a further aspect of the invention, a first dielectric layer is arranged on the second nonlinear layer or the reflective layer, a second dielectric layer is arranged between the second nonlinear layer and the data layer, a third dielectric layer is arranged between the spacer layer and the first nonlinear layer and a fourth dielectric layer is arranged between a cover layer and the first nonlinear layer, and the thickness of the dielectric layers and the nonlinear layers are adjusted such that the reflectivity of the whole stack is close to zero independent of the laser power between the protrusions and the first nonlinear layer.

In a first preferred embodiment, a semiconductor material is used for both nonlinear layers, in particular the same semiconductor material is used for both nonlinear layers. As the semiconductor material, for example one of the III/V semiconductor family, e.g. InSb, is advantageous. The thickness of the first nonlinear layer is e.g. within a range 5-10nm and the thickness of the second nonlinear layer within a range of 8-15nm, and the height of the depressions is within a range of 50-70 nm.

In a second preferred embodiment, the two nonlinear layers comprise different materials, for example the first nonlinear layer comprises a material exhibiting a high-to-low reflectivity change, e.g. a phase change material like GeSbTe, and the second nonlinear layer comprises a material having a low-to-high reflectivity change, e.g. a semiconductor material like InSb. For this embodiment, a smaller thickness range for the spacer layer and a lower height of the protrusions can be used. The thickness of the first nonlinear layer is e.g. within arrange of 5-10nm and the thickness of the second nonlinear layer within a range of 15-25nm.

In a third embodiment, the optical disc comprises only one nonlinear layer, the first nonlinear layer, and the second nonlinear layer is replaced by a metallic layer including or consisting of e.g. an amorphous silicon layer, a silver layer or a copper layer. By using an amorphous silicon layer, the thermal stability of the whole layer stack is improved. The thickness of the first nonlinear layer is e.g. within a range of 5-17nm and the thickness of the metallic layer within a range of 15-25nm. A height of the protrusions within a range of 40-60nm, e.g. 50nm, provide best results for this embodiment.

**BRIEF DESCRIPTION OF THE DRAWINGS**

Preferred embodiments of the invention are explained in more detail below by way of example with reference to schematic drawings, which show:

Fig. 1        an optical disc in a sectional view with a layer stack comprising a substrate, a data layer and a nonlinear layer according to prior art,

Fig. 2        a first embodiment of an optical disc including two nonlinear layers and a spacer layer according to the invention in a sectional view,

Fig. 3        an enlarged view of a pit shape of the optical disc of Fig. 2,

Fig. 4        simulation results for reflectivity values as a function of the thickness of the spacer layer for the first embodiment,

Fig. 5        a pit profile and corresponding reflectivity values for an optical disc according to the first embodiment,

Fig. 6        a table showing optical parameters and optimized thickness values for the layers according to the first embodiment,

Figs. 7,8      simulation results for the variation of optical parameters as a function of the thickness of the spacer layer for the first embodiment,

Figs. 9, 10     simulation results for the variation of optical parameters as a function of the thickness of the first nonlinear layer for the first embodiment,

Fig. 11     simulation results for reflectivity values as a function of the thickness of a spacer layer according to a second embodiment,

Fig. 12     a table showing optical parameters and optimized thickness values for layers according to the second embodiment,

Fig. 13     a simulated HF signal showing the super-resolution effect for an optical disc according to the first embodiment,

Fig. 14     a simulated HF signal showing the super-resolution effect for an optical disc according to the second embodiment,

Fig. 15     simulation results for reflectivity values as a function of the thickness of a spacer layer according to a third embodiment,

Fig. 16     a table showing optical parameters and optimized thickness values for layers according to the third embodiment, and

Fig. 17     a simulated HF signal showing the super-resolution effect for an optical disc according to the third embodiment.

## DETAILED DESCRIPTION OF PREFERRED EMBODIMENTS

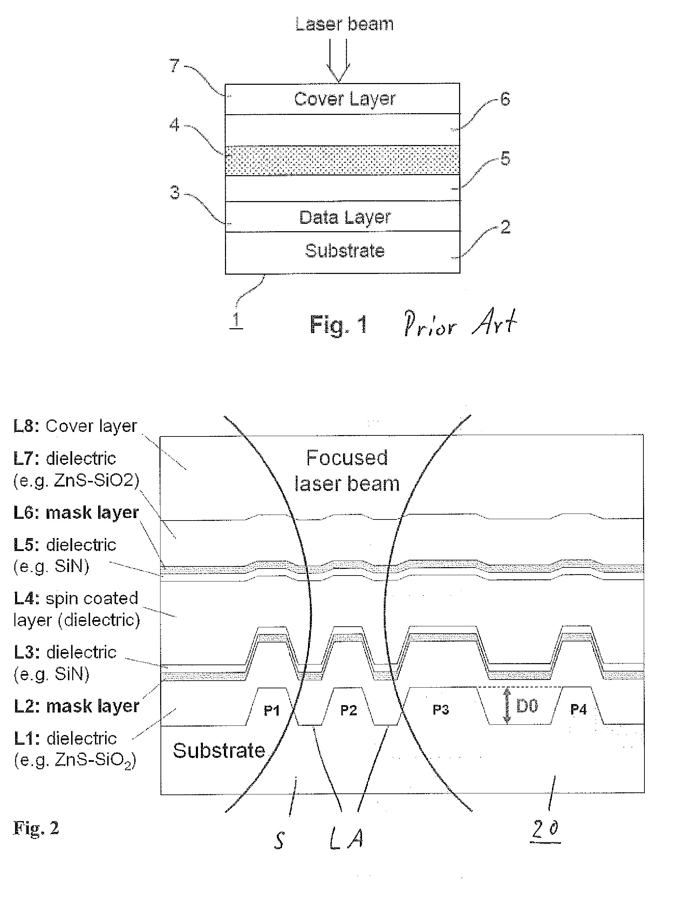

In Fig. 1 an optical storage medium 1 according to prior art is shown in a cross section in a simplified manner. The optical storage medium 1 is in particular a read-only (ROM) optical storage disc. On a substrate 2 a data layer 3 is arranged which may comprise a reflective metallic layer, for example an aluminum layer, not shown. The data layer 3 has a data structure consisting of marks and spaces arranged on essentially parallel tracks. For a ROM disc, the marks and spaces consist of pits and lands, the pits being molded or embossed on the surface of substrate 2 for representing the data layer 3. On the data layer 3 a first dielectric layer 5 is arranged and on the dielectric layer 5 a nonlinear layer 4 is arranged for providing the function of a mask layer for utilizing a super-resolution effect. The nonlinear layer 4 comprises for example a super-resolution structure for providing the super-resolution effect, e.g. a super-resolution near-field structure (Super-RENS).

Above the nonlinear layer 4 a second dielectric layer 6 is disposed. As a further layer, a cover layer 7 is disposed on the second dielectric layer 5 as a protective layer. For reading the data of the data layer 3, a laser beam is applied in this embodiment from the top of the storage medium 1, penetrating first the cover layer 7. The optical storage medium 1 is in particular an optical disc having outside dimensions similar to DVDs and CDs. The first and second dielectric layers 5, 6 comprise for example the material ZnS-SiO$_2$. The substrate 2 and the cover layer 7 may consist of a plastic material, as known from DVDs and CDs. The layers of the storage medium 1 are arranged particularly as a layer stack. The nonlinear layer 4 comprises for example a semiconductor material of the III-V semiconductor family, e.g. GaSb, InAs or InSb, or a phase-change material, for example a chalcogenide material, as the super-resolution structure.

The super-resolution effect allows detecting pits, which have a size, in particular a length, which is below the optical resolution limit of a corresponding apparatus for reading of the data of the optical storage medium. It has been demonstrated that the super-resolution detection of an optical disc comprising a phase-change material, also other materials like semiconductor materials, is related to a local change of the optical properties of the nonlinear layer 4.

The super-resolution technique like Super-RENS allows therefore to increase the linear data density by a factor of 2 to 4 with regard to a Blue-Ray disc, depending on the materials of the layer stack and on the detection method.

The super-resolution effect of the materials as described above is related to the increased power or temperature during read-out: for phase-change materials, a thermal process is assumed, because at higher laser power the phase-change material is melted and consequently reflectivity is reduced and transmission is increased reversibly. For semiconductor materials like InSb, a reversible semiconductor-metal transition is proposed, connected with an increase of reflectivity at higher laser power. However, also for this material thermal melting is discussed as reason of the nonlinear change at higher read power.

The present invention provides an improved super-resolution optical disc by using a layer structure including convex pits represented as bumps or protrusions on a substrate layer and including a spin-coated spacer layer separating two nonlinear layers or a nonlinear layer and a reflective layer.

A first embodiment of the invention is described with regard to Fig. 2, which shows an optical disc 20 in a cross section in a simplified manner. The optical disc 20 comprises a layer stack including a substrate layer S with prerecorded convex pits P1-P4 having a height D0, which is manufactured for example by using injection molding. The pits P1-P4 are separated by lands respectively land areas LA. Then the following layers are disposed on to the substrate layer S: a first dielectric layer L1 comprising for example the material ZnS-Si02, Si02 and/or SiN, a first nonlinear layer L2, comprising for example a semiconductor material like InSb, a second dielectric layer L3, comprising for example the material SiN having a moderate thermal conductivity, a spacer layer L4, for example a spin coated dielectric layer, a third dielectric layer L5, comprising for example the material SiN, a second nonlinear layer L6, comprising for example a semiconductor material like InSb, a fourth dielectric layer L7 comprising for example the material ZnS-Si02, Si02 and/or SiN, and a thin cover layer L8.

The main functions of the different layers are: layers L1, L7 provide an adjustment of the optical contrast (reflectivity change), layers L2, L6 have the function of a mask layer showing nonlinear optical properties at increased laser power, nonlinear change of refractive index n, absorption index k and reflectivity R, layers L3, L5 provide a protection of the mask layers from chemical influences from the spin coated layer and a thermal balancing, and spacer layer L4 provides a smoothing of the convex pits. The cover layer L8 is used to protect the layer stack. This manufacturing process belongs to disc formats which are read out through the thin cover layer L8, for example like Blu-Ray discs.

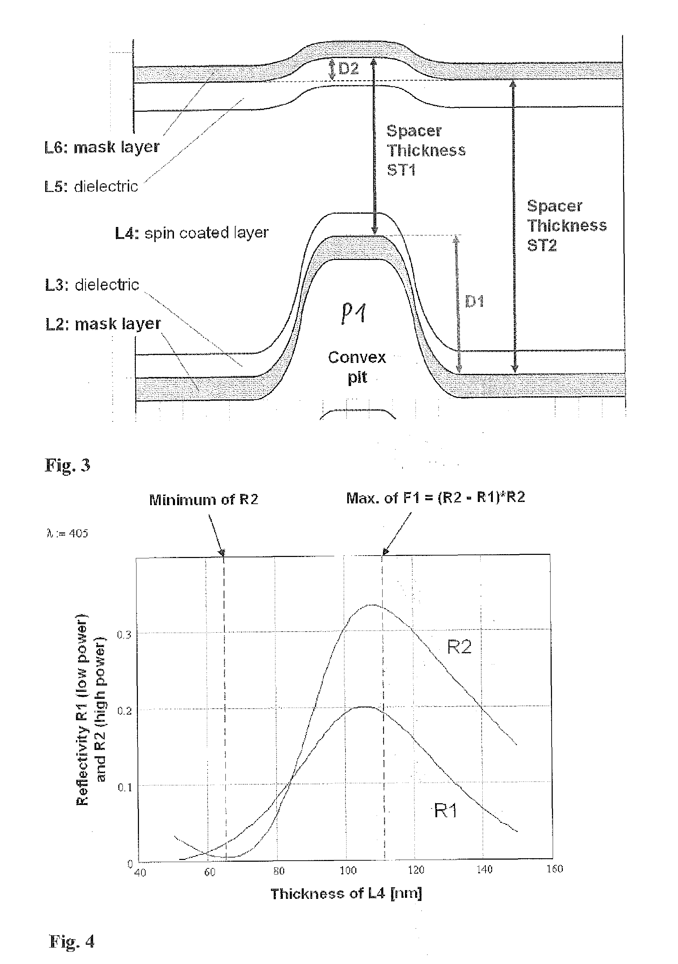

Fig. 3 shows an enlarged view on a convex pit shape of pit P1 and the layers L2 to L6. The convex pit shape which is formed on the substrate S is also visible in the layers L1 - L3, but the pit height may change after each deposition step. Therefore, the transferred pit height after the mask layer L2 is deposited is labeled D1. Further, the small remaining pit height in layer L6 is labeled D2.

As shown in Figs. 2 and 3, the layer structure follows the pit shape for the first layers L1 to L3. By using a spin coating process for layer L4, the pit shape is smoothed and only a very low surface modulation is remaining in the layers L5 to L7. Thin layers of dielectric materials can be manufactured in the thickness range of 40nm to 200nm with good optical quality. Further, it can be seen in Fig. 3 that the separation distance between the two mask layers L2, L6 is different on pit, separation distance ST1, and on land, separation distance ST2. The following relation can be extracted from the Fig. 3:

$$D1 + ST1 = D2 + ST2 \qquad\qquad (1)$$

In a preferred embodiment, the two mask layers L2, L6 are based on materials which show an increase of reflectivity at higher laser power, like for example InSb. As the optical interference between the two mask layers strongly depends on the distance, the reflectivity change will be quite different for a laser beam focused on land or on a convex pit, where the separation distance ST1 is much smaller. In the following it is shown that the layer stack can be adjusted in such a way that the reflectivity on pit is close to zero independent of the laser power whereas a usual reflectivity change can be reached between the pits, corresponding with a reflectivity change of a land. The advantage of this approach is that a very strong modulation of the HF signal can be reached because the reflected signal of the pits is very low.

The thickness of the layers L1, L2 and L6, L7 can be adjusted such that for a certain thickness ST1 of the spacer layer L4 the reflectivity of the whole layer stack is close to zero independent of the laser power, whereas at the another thickness ST2 two different reflectivity values R1 and R2 exist at low and high laser power, the high laser power allowing super resolution readout. Fig. 4 shows simulation results for reflectivity values R1, R2 versus thickness of the spacer layer L4. Reflectivity R1 corresponds to a low laser power at which no super-resolution is present and R2 to a high laser power providing the super-resolution effect.

For a thickness around 60nm of layer L4, both values R1 and R2 are very low. At about 65nm the reflectivity curve R2 has a minimum and at 111nm the function F1 has a maximum. Here F1 is the product of the reflectivity change and the higher reflectivity value:

$$F1 = (R2 - R1)*R2 \qquad\qquad (2)$$

The thickness of the layer L4 is advantageously chosen such that it corresponds to the maximum of the function F1. For the conditions of Fig. 4 this thickness is about 111nm. Further, the pit height is chosen such that the corresponding thickness on the pits is smaller and in particular both R1 and R2 are close to zero. For the conditions of fig. 4 this thickness is about 60nm. The thickness where R2 is minimal is slightly higher, about 65nm, but this is not preferred as R1 and R2 are different. Using the relation (1) between D1, D2, ST1 and ST2, one can calculate the following:

Assuming that the smoothed pit height D2 is 10nm and that D0 is equal to D1 one obtains a substrate pit height of 61nm. By using such disc structure it is possible to optimize the modulation of the HF signal: If the laser spot scans over a land area where the L4 thickness is high a good super-resolution signal with high amplitude can be detected. If the spot scans over a pit the signal is close to zero due to the very low reflectivity.

The signal detection will be illustrated by applying the simulated reflectivity curves as illustrated in Fig. 4 to a realistic pit structure of a super-resolution optical disc having a substrate with convex pits and the following dimensions: track pitch = 260nm, shortest pit length = 80nm. The pit height was adjusted to the optimum value according to the simulation shown in Fig. 4.

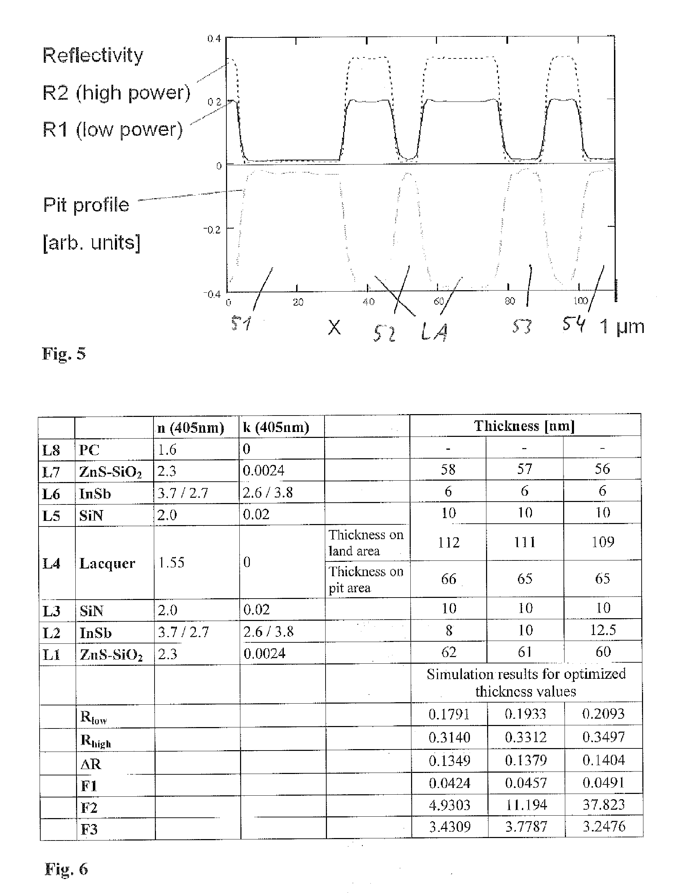

Diagram 5 shows in the lower part a pit profile along a track where the high level belongs to pits 51-54 and the low level belongs to the land area LA. The scale of the ordinate is in arbitrary units. In the upper part of Fig. 5, the corresponding reflectivity values are shown for low laser power, reflectivity value R1, and high laser power, reflectivity value R2. As expected, both reflectivity values R1 and R2 are nearly zero in the pit area. Therefore, in principle a high modulation can be achieved with the proposed disc structure.

The table shown in Fig. 6 describes details of the optical parameters used for the simulation, the layer thickness of all layers and the optimization procedure. The optical parameters n and k are shown for the wavelength of 405nm. Further, for the mask layers L2 and L6 different parameters are given for low laser power and high laser power. Using these parameters, simulations of the overall reflectivity for low and high power have been made in order to find the best layer thickness of the layers L1, L2, L4, L6 and L7. Here, it was not useful to change also the thickness of the layers L3 and L5. Shown in the table are three examples of optimized layer stacks, where the second one with L2 thickness of 10nm shows the best performance.

The optimization of the thickness of each layer was made by using the following optimization functions:

$$F1 = (R2 - R1) * R2 \qquad (3)$$

$$F2 = F1 / Rmin \qquad (4)$$

$$F3 = F1 / R(60nm) \qquad (5)$$

F2 is F1 normalized by the minimum reflectivity at around 65nm thickness of layer L4. F3 is F1 normalized by the reflectivity close to the crossing point of reflectivity R1 and R2 at around 60nm thickness of L4. For the calculation the maximum of the two numbers R1(60nm) and R2(60nm) is used.

The first function F1 is a good measure for the detectable super-resolution signal as it increases with the reflectivity difference $\Delta R$ = R2 - R2 and the higher reflectivity level R2. However, this function does not incorporate the requirement to have a thickness where both reflectivity curves R1 and R2 are small. Therefore, the functions F2 and F3 have been defined to optimize all requirements at the same time. Especially, F3 is a good optimization function as a high value of F3 secures that both R1 and R2 are sufficiently low while high reflectivity values at higher thickness of layer L4 can be maintained, in accordance with Fig. 4.

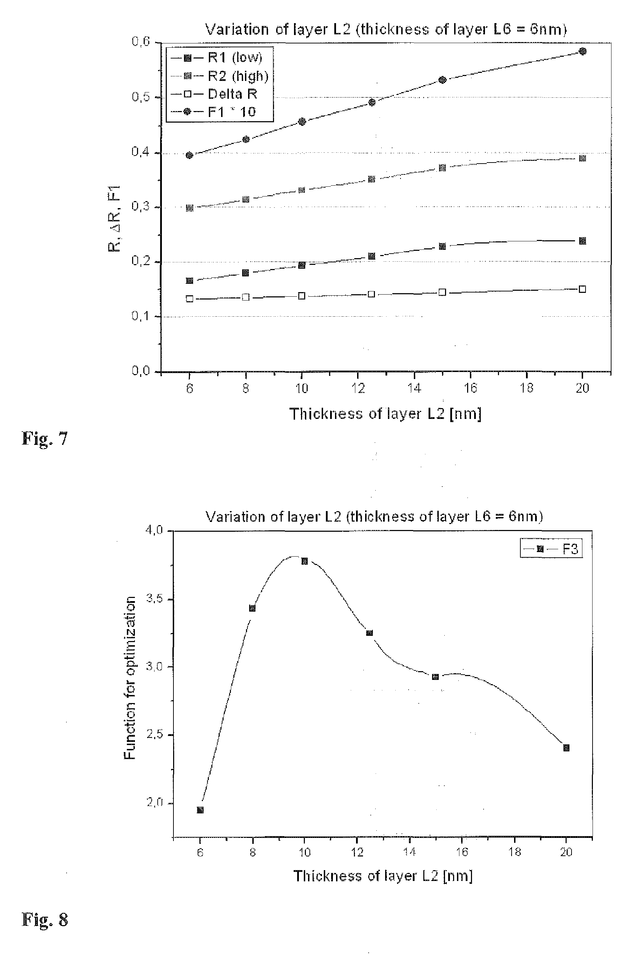

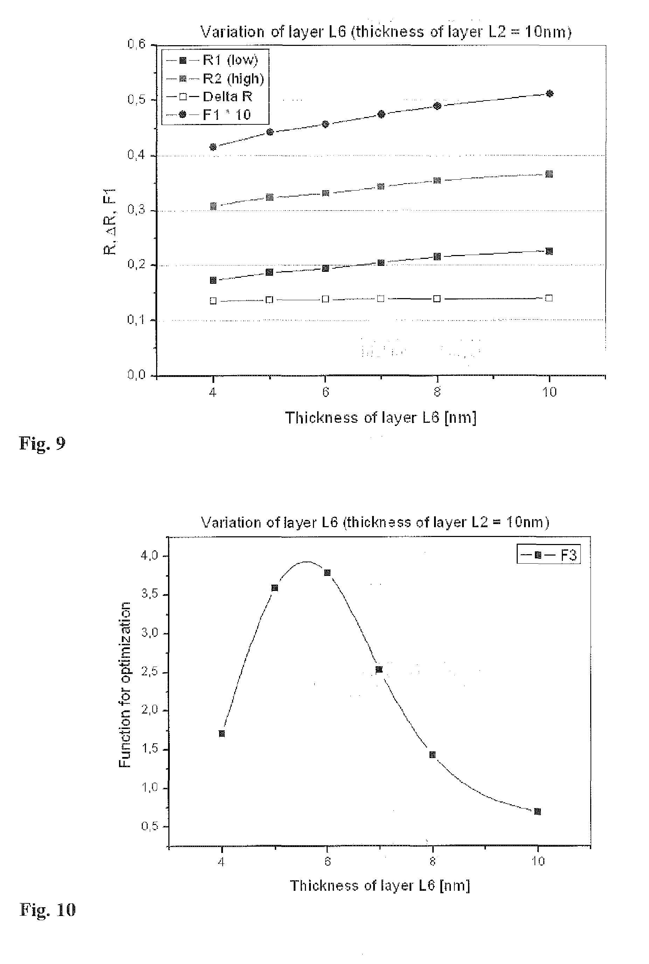

From the table it can be seen that the difference in reflectivity $\Delta R$ and also the functions F1 and F2 increase with increasing thickness of the layer L2. In contrary, the function F3 shows a certain maximum at a specific layer thickness. More details on the variation of the parameters R1, R2, $\Delta R$, F1 and F3 with increasing layer thickness of L2 and L6 are shown in the Figs. 7-10. Fig. 7 shows the variation of the parameters R1 and R2, $\Delta R$ and F1 with increasing thickness of the layer L2. For this calculation InSb is used for L2. Fig. 8 shows the variation of the function F3 with increasing thickness of the layer L2. For this calculation InSb is used for L2. Fig. 9 shows the variation of the parameters R1 and R2, $\Delta R$ and F1 with increasing thickness of the layer L6. For this calculation InSb is used for L6. Fig. 10 shows the variation of the function F3 with increasing thickness of the layer L6. For this calculation InSb is used for L6. Especially the clear maximum of F3 can be seen in Fig. 8 and Fig. 10.

As a second preferred embodiment, an optical disc is described comprising a layer stack having two super-resolution layers with different nonlinear materials. The disc structure of this embodiment is in correspondence with the layer as shown in Fig. 2. Here also, first the substrate layer S with prerecorded convex pits is manufactured by injection molding. Then the following layers are coated on to the substrate layer S:

L1: Dielectric layer (ZnS-Si02, Si02, SiN, etc.)
L2: Mask layer with low-to-high reflectivity change (e.g. InSb)
L3: Dielectric layer with moderate thermal conductivity (e.g. SiN)
L4: Spin coated dielectric layer
L5: Dielectric layer with moderate thermal conductivity (e.g. SiN)
L6: Mask layer with high-to-low reflectivity change (e.g. GeSbTe)
L7: Dielectric layer (ZnS-Si02, Si02, SiN, etc.)

As a material having a low-to-high reflectivity change a material is understood, which has a low reflectivity at low laser power and a high reflectivity at high laser power being sufficient for providing the super-resolution effect. As a material having a high-to-low reflectivity change a material is understood, which has a high reflectivity at low laser power and a low reflectivity at high laser power being sufficient for providing the super-resolution effect.

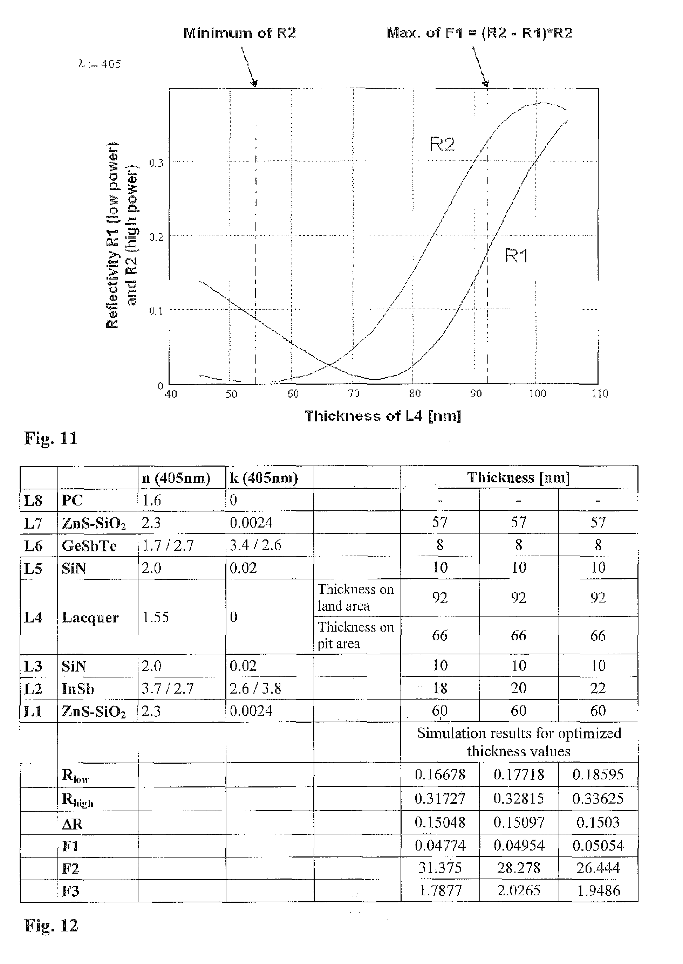

Although the behavior of the phase change materials GeSbTe is opposite to the low-to-high material InSb, there is still a very effective interference effect between the two layers which allows a low reflectivity at one thickness of spacer layer L4 and a high reflectivity change at another thickness of L4 similar to the results of the first embodiment, as shown in Fig. 4. In particular in this case a smaller thickness range and lower pit height can be used as shown in Fig. 11, which shows simulation results for reflectivity values R1, R2 versus thickness of the spacer layer L4. Reflectivity R1 corresponds to a low laser power at which no super-resolution is present and R2 to a high laser power providing the super-resolution effect.

The layer thickness on the pits should be about 60nm, which is between the minimum of R2 and the crossing points of R1 and R2 and the thickness on land should be 92nm to ensure a high value of F1. Then the difference D1 - D2 can be calculated as follows: D1 - D2 = 92nm - 60nm = 32nm Assuming that the smoothed pit height D2 is 8nm and that D0 is equal to D1 one gets a substrate pit height of 40nm.

The table shown in Fig. 12 describes details of the optical parameters used for the simulation of the embodiment comprising two different mask layers with the nonlinear materials GeSbTe and InSb, the obtained layer thickness of all layers and the optimization procedure. The optical parameters n and k are shown for the wavelength of 405nm. Further, for the mask layers L2 and L6 different parameters are given for low laser power and high laser power. Using these parameters, simulations of the overall reflectivity for low and high power have been made in order to find the best layer thickness of the layers L1, L2, L4, L6 and L7.

From the table shown in Fig. 12, it can be seen that compared to the first embodiment a higher value of F1 can be reached, but the value of F3 is reduced from 3.8 to 2.0.

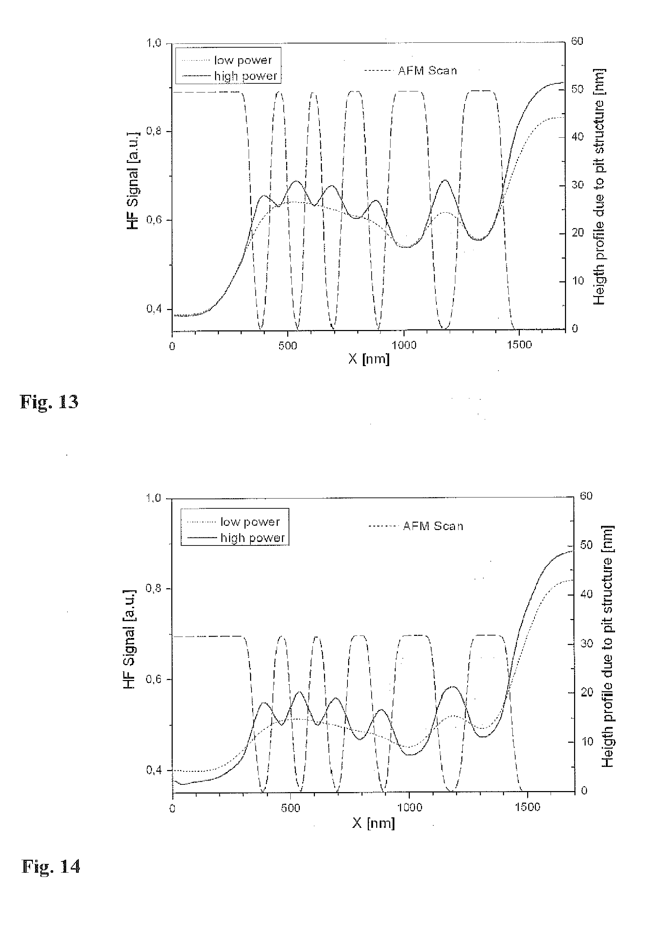

For both embodiments as described, the first one comprising two nonlinear layers having the same nonlinear material and the second comprising two nonlinear layers having different nonlinear materials, simulated HF signal curves are shown in Figs. 13 and 14. The upper part corresponds to the disc structure with two InSb layers in accordance with the table of Fig. 6, whereas the lower part corresponds to the disc structure with one GeSbTe and one InSb layer in accordance with the table of Fig. 12. For low read power, dotted curves, the 80nm pits cannot be detected, whereas for a high read power above the threshold for the super-resolution effect, straight curves, a clear signal modulation can be seen.

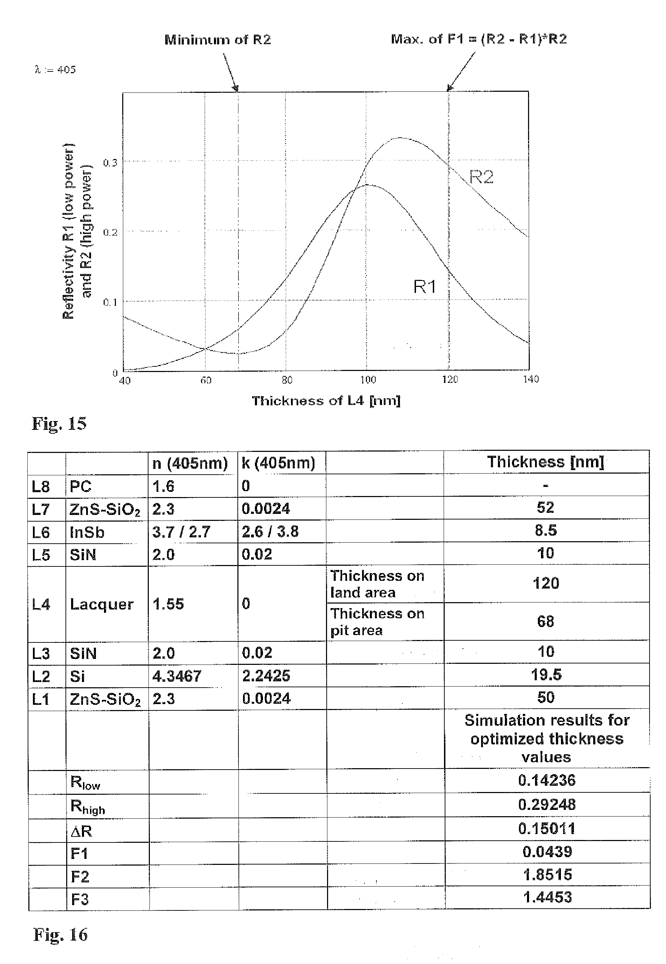

In a third embodiment, an optical disc is described which uses only one mask layer, particularly layer L6, which is nearly flat and which has a continuous thermal conductivity allowing sufficient heat dissipation after read-out. The layer L2 comprises a reflective material with appropriate optical parameters n and k, for example amorphous silicon, Si. In this case the thermal stability of the whole layer stack is improved, but the efficiency of the high reflectivity change for high thickness of spacer layer L4 and low reflectivity for lower thickness of L4 is slightly reduced. A simulation was made using amorphous Si for the layer L2 and InSb for the layer L6 and the corresponding reflectivity curves are shown in Fig. 15. Also other materials like silver, Ag, or copper, Cu, can be used instead of Si, but Si seems to be the best candidate.

The table shown in Fig. 16 describes details of the optical parameters used for the simulation of the third embodiment comprising a single mask layer L6 with InSb and a reflective layer comprising Si, the obtained layer thickness of all layers and the optimization procedure. Whereas the function F1 has a value which is only slightly lower than in the previous embodiments, the function F3 is strongly reduced which indicates that the reflectivity values of R1 and R2 around 60nm thickness are both higher and the destructive interference is less effective.

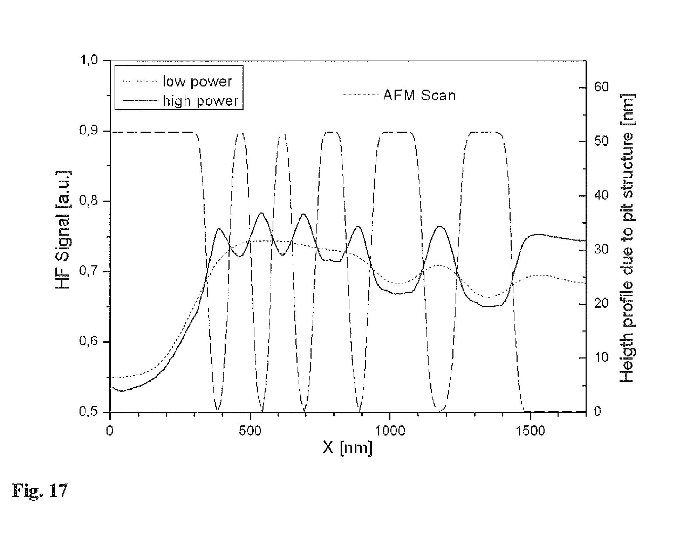

Simulated HF signal curves for this embodiment are shown in Fig. 17, which clearly indicate that super-resolution can be achieved with this configuration. However, compared to the previous embodiments, the HF signal on land is strongly reduced as can be seen in the right part of the straight curve, between 1500nm and 1700nm.

On one hand it is obvious that the simulation results strongly depend on the exact optical parameters. On the other hand, the optical parameters n and k depend on the exact manufacturing process and also on the thickness of the layers. As a consequence, the optimum thickness for each layer has to be adjusted accordingly based on the actual experimental conditions. Nonetheless, the basic principle of this optimization procedure and more specifically, the basic behavior of the reflectivity R1 and R2 with increasing distance between the two layers L2 and L6 is not affected by the variation of optical parameters of the materials.

Further, for practical applications it might be useful to change the layer thickness of one or the other layer from the theoretical optimum to optimize the overall performance of the optical disc, e.g. in order to improve the signal amplitude or the stability. The proposed disc structure can be optimized in particular to allow a strong super-resolution effect and high modulation of the HF signal due to the destructive interference between the two layers L2 and L6, for providing an optical disc having a high data capacity.

Also other embodiments of the invention can be utilized by a person skilled in the art without departing from the spirit and scope of the present invention. The invention is in particular not limited to the materials as described with regard to the preceding embodiments. The invention resides therefore in the claims herein after appended.

**Claims**

1. Optical disc (20) comprising
   a substrate layer (S),
   a read-only data layer (3) having a pit/land data structure (P1-P4) arranged on the substrate layer,
   a first nonlinear layer (L6) with a super-resolution structure, and
   a second nonlinear layer (L2) with a super resolution structure or a reflective layer arranged between the first nonlinear layer (L6) and the data layer (3), **characterized in that**
   a spacer layer (L4) is disposed between the first and the second nonlinear layer (L6, L2), which spacer layer has a thickness (ST1) which is smaller between pits (P1-P4) and the first nonlinear layer (L6) with regard to the thickness (ST2) between lands (LA) and the first nonlinear layer (L6).

2. The optical disc of claim 1, **wherein** the pits (P1-P4) are arranged as protrusions on the data layer (3).

3. The optical disc of claim 2, **wherein** the spacer layer (L4) has a thickness (ST1) between the protrusions and the first nonlinear layer (L6) such that the reflectivity of the whole stack is close to zero independent of the laser power, whereas the spacer layer (L4) has a thickness (ST2) between the land areas and the first nonlinear layer (L6) such two different reflectivity values (R1, R2) exist at low and high laser power to allow super resolution readout.

4. The optical disc of claim 1, 2 or 3, **wherein** the spacer layer (L4) is disposed by using a spin-coating technique.

5. The optical disc of one of the preceding claims, **wherein** the spacer layer (L4) is disposed on a first dielectric layer (L3) arranged on the second nonlinear layer (L2) or the reflective layer, or on the second nonlinear layer (L2) or the reflective layer.

6. The optical disc of one of the preceding claims, **wherein** both nonlinear layers comprise or consist of the same material, for example a semiconductor material.

7. The optical disc of claim 6, **wherein** the same material is one of the III-V semiconductor family, in particular GaSb or an indium alloy, for example InAs or InSb.

8. Optical disc according to one of the preceding claims 1-5, **wherein** the nonlinear layer (4) comprises a phase-change material as the super-resolution structure, for example a chalcogenide material.

9. The optical disc of one of the preceding claims, **wherein** the metallic layer includes or consists of an amorphous silicon layer, a silver layer or a copper layer.

10. The optical disc of one of the preceding claims, **wherein** a second dielectric layer (L1) is arranged between the second nonlinear layer (L2) and the data layer (3).

11. The optical disc of one of the preceding claims, **comprising** further a third dielectric layer (L5) arranged between the spacer layer (L4) and the first nonlinear layer (L6).

12. The optical disc of one of the preceding claims, **comprising** further a cover layer (L8) and a fourth dielectric layer (L7) between the cover layer (L8) and the first nonlinear layer (L6).

Laser beam

7 — Cover Layer — 6

4 —

— 5

3 — Data Layer

— 2

Substrate

1

**Fig. 1** *Prior Art*

L8: Cover layer

L7: dielectric
(e.g. ZnS-SiO2)

L6: mask layer

L5: dielectric
(e.g. SiN)

L4: spin coated
layer (dielectric)

L3: dielectric
(e.g. SiN)

L2: mask layer

L1: dielectric
(e.g. ZnS-SiO₂)

Focused
laser beam

P1  P2  P3  D0  P4

Substrate

Fig. 2

S  LA  20

L6: mask layer

L5: dielectric

L4: spin coated layer

L3: dielectric

L2: mask layer

D2

Spacer
Thickness
ST1

Spacer
Thickness
ST2

D1

ρ1

Convex
pit

**Fig. 3**

λ := 405

Minimum of R2

Max. of F1 = (R2 - R1)*R2

Reflectivity R1 (low power)
and R2 (high power)

0.3

0.2

0.1

R2

R1

40    60    80    100    120    140    160

Thickness of L4 [nm]

**Fig. 4**

Reflectivity

R2 (high power)

R1 (low power)

Pit profile

[arb. units]

**Fig. 5**

|     |                     | n (405nm) | k (405nm) |                          | Thickness [nm] | | |
| --- | ------------------- | --------- | --------- | ------------------------ | ------ | ------ | ------ |
| L8  | PC                  | 1.6       | 0         |                          | –      | –      | –      |
| L7  | ZnS-SiO$_2$         | 2.3       | 0.0024    |                          | 58     | 57     | 56     |
| L6  | InSb                | 3.7 / 2.7 | 2.6 / 3.8 |                          | 6      | 6      | 6      |
| L5  | SiN                 | 2.0       | 0.02      |                          | 10     | 10     | 10     |
| L4  | Lacquer             | 1.55      | 0         | Thickness on land area   | 112    | 111    | 109    |
|     |                     |           |           | Thickness on pit area    | 66     | 65     | 65     |
| L3  | SiN                 | 2.0       | 0.02      |                          | 10     | 10     | 10     |
| L2  | InSb                | 3.7 / 2.7 | 2.6 / 3.8 |                          | 8      | 10     | 12.5   |
| L1  | ZnS-SiO$_2$         | 2.3       | 0.0024    |                          | 62     | 61     | 60     |
|     |                     |           |           |                          | Simulation results for optimized thickness values | | |
|     | $R_{low}$           |           |           |                          | 0.1791 | 0.1933 | 0.2093 |
|     | $R_{high}$          |           |           |                          | 0.3140 | 0.3312 | 0.3497 |
|     | AR                  |           |           |                          | 0.1349 | 0.1379 | 0.1404 |
|     | F1                  |           |           |                          | 0.0424 | 0.0457 | 0.0491 |
|     | F2                  |           |           |                          | 4.9303 | 11.194 | 37.823 |
|     | F3                  |           |           |                          | 3.4309 | 3.7787 | 3.2476 |

**Fig. 6**

Fig. 7

Fig. 8

**Fig. 9**

**Fig. 10**

Minimum of R2       Max. of F1 = (R2 - R1)*R2

$\lambda := 405$

**Fig. 11**

| | | n (405nm) | k (405nm) | | Thickness [nm] | | |
|---|---|---|---|---|---|---|---|
| L8 | PC | 1.6 | 0 | | - | - | - |
| L7 | ZnS-SiO$_2$ | 2.3 | 0.0024 | | 57 | 57 | 57 |
| L6 | GeSbTe | 1.7 / 2.7 | 3.4 / 2.6 | | 8 | 8 | 8 |
| L5 | SiN | 2.0 | 0.02 | | 10 | 10 | 10 |
| L4 | Lacquer | 1.55 | 0 | Thickness on land area | 92 | 92 | 92 |
| | | | | Thickness on pit area | 66 | 66 | 66 |
| L3 | SiN | 2.0 | 0.02 | | 10 | 10 | 10 |
| L2 | InSb | 3.7 / 2.7 | 2.6 / 3.8 | | 18 | 20 | 22 |
| L1 | ZnS-SiO$_2$ | 2.3 | 0.0024 | | 60 | 60 | 60 |
| | | | | | Simulation results for optimized thickness values | | |
| | R$_{low}$ | | | | 0.16678 | 0.17718 | 0.18595 |
| | R$_{high}$ | | | | 0.31727 | 0.32815 | 0.33625 |
| | $\Delta$R | | | | 0.15048 | 0.15097 | 0.1503 |
| | F1 | | | | 0.04774 | 0.04954 | 0.05054 |
| | F2 | | | | 31.375 | 28.278 | 26.444 |
| | F3 | | | | 1.7877 | 2.0265 | 1.9486 |

**Fig. 12**

**Fig. 13**

**Fig. 14**

Minimum of R2                    Max. of F1 = (R2 - R1)*R2

$\lambda := 405$

**Fig. 15**

|    |          | n (405nm) | k (405nm) |                            | Thickness [nm] |
|----|----------|-----------|-----------|----------------------------|----------------|
| L8 | PC       | 1.6       | 0         |                            | -              |
| L7 | ZnS-SiO$_2$ | 2.3    | 0.0024    |                            | 52             |
| L6 | InSb     | 3.7 / 2.7 | 2.6 / 3.8 |                            | 8.5            |
| L5 | SiN      | 2.0       | 0.02      |                            | 10             |
| L4 | Lacquer  | 1.55      | 0         | Thickness on land area     | 120            |
|    |          |           |           | Thickness on pit area      | 68             |
| L3 | SiN      | 2.0       | 0.02      |                            | 10             |
| L2 | Si       | 4.3467    | 2.2425    |                            | 19.5           |
| L1 | ZnS-SiO$_2$ | 2.3    | 0.0024    |                            | 50             |
|    |          |           |           |                            | Simulation results for optimized thickness values |
|    | $R_{low}$ |          |           |                            | 0.14236        |
|    | $R_{high}$ |         |           |                            | 0.29248        |
|    | $\Delta R$ |         |           |                            | 0.15011        |
|    | F1       |           |           |                            | 0.0439         |
|    | F2       |           |           |                            | 1.8515         |
|    | F3       |           |           |                            | 1.4453         |

**Fig. 16**

Fig. 17

Europäisches
Patentamt

European
Patent Office

Office européen
des brevets

**EUROPEAN SEARCH REPORT**

Application Number

EP 10 30 5489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 950 759 A1 (DEUTSCHE THOMSON OHG [DE]) 30 July 2008 (2008-07-30) | 1,2,4 | INV.<br>G11B7/24<br>G11B7/257 |
| Y | * paragraphs [0008] - [0012], [0014] - [0027]; figures 2-4 * | 3,5-7, 10,12 | |
| A | * abstract * | 8,9,11 | |
| | ----- | | |
| Y,D | EP 2 109 104 A1 (DEUTSCHE THOMSON OHG [DE]) 14 October 2009 (2009-10-14) | 5-7,10, 12 | |
| A | * paragraphs [0014], [0023] - [0025]; figure 4 * | 1-4,8,9, 11 | |
| | ----- | | |
| Y | US 2008/205236 A1 (SHINTANI TOSHIMICHI [JP] ET AL) 28 August 2008 (2008-08-28) * paragraph [0019]; figures 5a,5b * * abstract * | 3 | |
| | ----- | | |

TECHNICAL FIELDS
SEARCHED        (IPC)

G11B

The present search report has been drawn up for all claims

| Place of search | Date of completion of the search | Examiner |
|---|---|---|
| Munich | 29 September 2010 | Lehnberg, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 30 5489

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2010

| Patent document cited in search report | | Publication date | Patent family member(s) | | Publication date |
|---|---|---|---|---|---|
| EP 1950759 | A1 | 30-07-2008 | CN | 101583999 A | 18-11-2009 |
| | | | EP | 2106609 A1 | 07-10-2009 |
| | | | WO | 2008090104 A1 | 31-07-2008 |
| | | | JP | 2010517202 T | 20-05-2010 |
| | | | US | 2010062203 A1 | 11-03-2010 |
| EP 2109104 | A1 | 14-10-2009 | WO | 2009124735 A1 | 15-10-2009 |
| US 2008205236 | A1 | 28-08-2008 | CN | 101256790 A | 03-09-2008 |
| | | | JP | 2008210485 A | 11-09-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009124735 A